# EUROPÄISCHE PATENTANMELDUNG

(11) **EP 0 585 892 A1**
(43) Veröffentlichungstag der Anmeldung: **09.03.1994**
(21) Anmeldenummer: 93113940.6
(22) Anmeldetag: 01.09.1993
(51) Int. Cl.: F23J 15/00, F23M 13/00, B01D 53/00

(54) **Abgasreinigungsanlage mit Abgaswärmetauscher und Schalldämpfer**

(30) Priorität: 03.09.1992 DE 9211888 U; 03.09.1992 DE 4229445
(71) Anmelder: Bezold, Dieter Eugen, D-90453 Nürnberg (DE); Schwarzer, Rolf-Thomas, D-90765 Fürth/Bay. (DE); Gammel, Michael, D-90765 Fürth/Bay. (DE)
(72) Erfinder: Schwarzer, Rolf-Thomas, D-90542 Eckental (DE); Gammel, Michael, D-93326 Abensberg (DE)
(74) Vertreter: Besendorfer, Hans, Dr.

(57) **Zusammenfassung**

Eine Rauchgaswäsche ( Fig.1 ) besteht aus dem Mantel rohr ( 1.1 ), dem Füllkörperauflagerost ( 1.4 ), einem Siebabschluß ( 1.7 ),einer Füllkörperschüttung ( 1.5 + 1.6 ), einem herausnehmbaren Waschstutzen mit eingesetztem Düsenträger ( 1.8 ), einem Hochspannungsfeld ( 1.9 ), einem äüßeren Mantelrohr ( 1.2 ) und angesetzten Stutzen(1.10+1.11).

Das Mantelrohr ( 1.1 ) ist mit dem äußeren Mantelrohr ( 1.2. ) fest oder abnehmbar verbunden.
Die Zu.-bzw. Ablaufstutzen ( 1.10 + 1.11 )sind mit dem äußeren Mantelrohr fest verbunden und vorzugsweise gegenüberliegend angeordnet.
Am oberen Teil des Mantelrohres ist ein Sieb ( 1.7 )angeordnet, am unteren Teil ein Auflagerost ( 1.4 ).
Auf dem Auflagerost sind Füllkörper ( 1.5 + 1.6 ) geschüttet oder geordnet aufgelegt; die Lagen im unteren Bereich sinnvoller Weise geordnet.
Unter dem Auflagerost sitzt ein Rohrstutzen ( 1.3 ) zur Aufnahme eines Düsenträgers ( 1.8 ) und am hinteren Ende ein Hochspannungsfeld bzw. Erzeuger ( 1.9 ).

## Beschreibung

Die Erfindung betrifft eine Rauch / Abgas / Abluft / Wärmerückgewinnungsanlage, zum Einbau in neu zu erstellende oder auch bestehende Kaminanlagen/Abgas od. Abluftanlagen.
Die Waschanlage wird sinnvoller Weise am Kaminkopf angeordnet, andere Anordnung ist bei einer Nachrüstung oder Neuerstellung auch möglich, wenn auch ggf. weniger wirksam.
Der Rauchgas / Abgasstrom wird im Gegenstrom durch die Abgasreinigung geleitet.
Hierbei wird über eine Eindüsung einer Waschflüssigkeit (z.B. Wasser) welches vorher elektr. aufgeladen werden kann, eingedüst.

Feste Bestandteile der Rauchgase, Wärme und auch Geruchsstoffe binden sich im Wassernebel und werden im Kaminsumpf gesammelt, mittels einer Pumpe einem Pufferbehälter zugeführt. In dem Pufferbehälter werden die festen Bestandteile der Abgase abgeschieden und die Wärme zur Weiternutzung entzogen (ggf. auch durch externen Wärmetauscher).
Sodann wird die Waschflüssigkeit dem Wäscherkreislauf wieder zugeführt.
Leckmengen werden durch z.B. eine Schwimmerschaltung im Pufferbehälter ersetzt.
Der verbleibende Sumpf im Pufferbehälter wird durch eine übliche Abschlammvorrichtung aus dem Pufferbehälter ausgetragen die Schadstoffe im Sumpf, bestehend z.B. aus Schwermetallen, Chloriden, Fetten, Asche, Staub etc., evtl. durch eine Umkehrosmose gereinigt
oder durch den Sondermüll entsorgt.
Die oberhalb der Ringdüse angeordeten Füllkörper, geordnete Lagen oder ungeordnete Lagen dienen der Tropfenabscheidung, damit es außerhalb der Kaminanlage nicht "regnet".
Gleichzeitig ergibt sich durch die Füllkörper ein hervorragend wirkender "breitbandiger Schalldämpfer".

Der Kühlmantel ist ursächlich gedacht, um die schalldämmende Wirkung des Gesamtsystemes zu erhöhen, starke Abkühlung bringt u.U. eine breitbandige Senkung des Schallpegels, von ca. 8 dBA, im Frequenzbereich von 150 - 1 MHz.
Bei ausreichend hoher Abgastemperatur kann dieser noch zur zusätzlichen Wärmerückgewinnung genutzt werden.

Die Aufgabe der Erfindung ist es, mit möglichst einfachen und preiswerten Mitteln Rauch.-u. Abgase zu Reinigen und die Atmosphäre weitestgehend frei von Schad.- und Geruchsstoffen zu halten.
Gleichzeitig ist es möglich, mittels einer Wärmerückgewinnung aus der Waschflüssigkeit, den Anlagenwirkungsgrad bis in den Bereich der Brennwertnutzung der Anlage zu steigern.

Aus Gründen der Haltbarkeit sollte die Ausführung in Glas, Kunststoff oder auch Sonder - stählen erfolgen.
Dies gilt nicht nur für die Abgaswäsche, sondern für das gesamte, vor. und nachgeschaltete Kamin / Rohrleitungssystem, bis zum Schadstofferzeuger.

Die Erfindung wird anhand eines Ausführungsbeispieles in den nachfolgenden Zeichnungen näher erläutert.

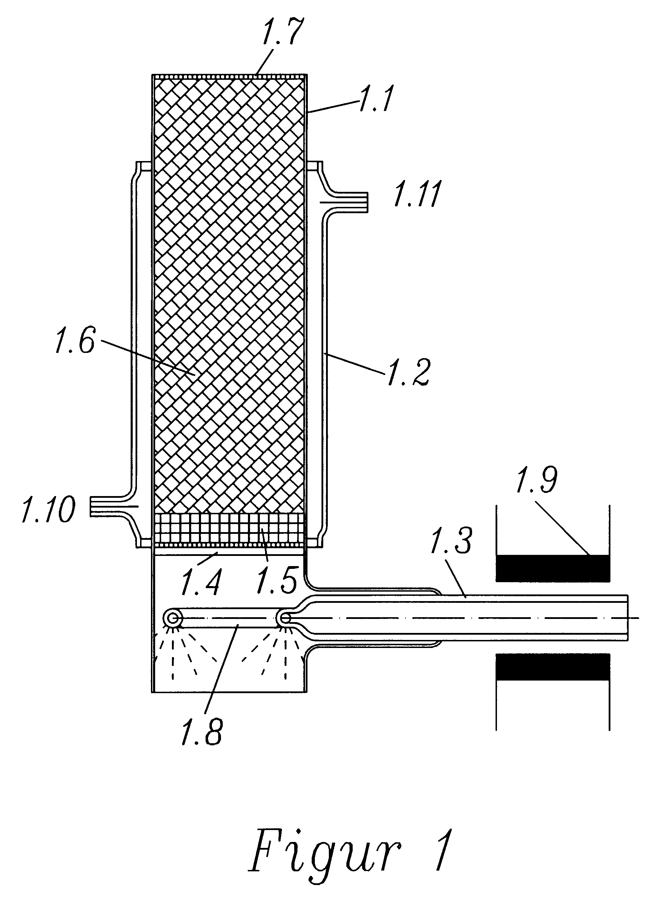

Es zeigen
- Figur 1: eine Zusammenstellungszeichnung der Waschanlage wie vorher beschrieben, mit Rauchgaskühlung (Doppelmantel), und elektr. Aufladung der Waschflüssigkeit.

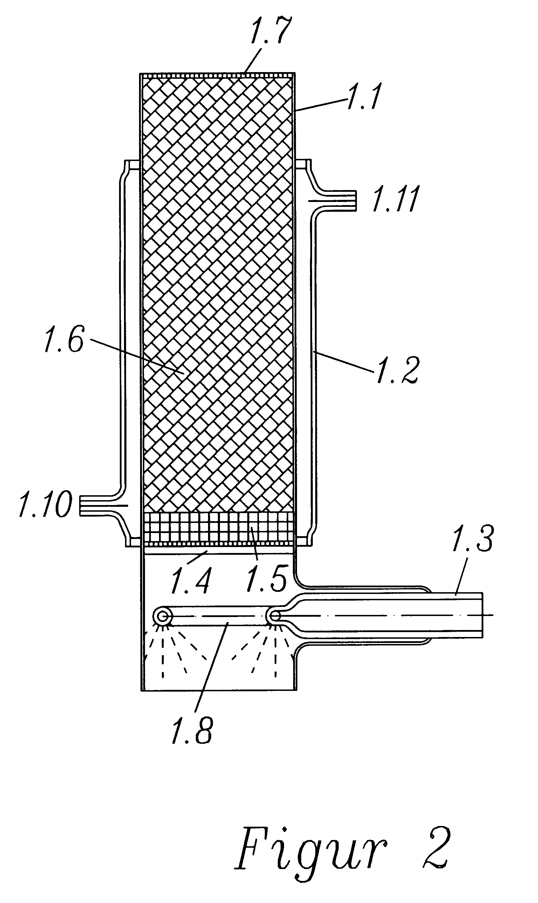

- Figur 2: wie vor, jedoch ohne elektrische Aufladung

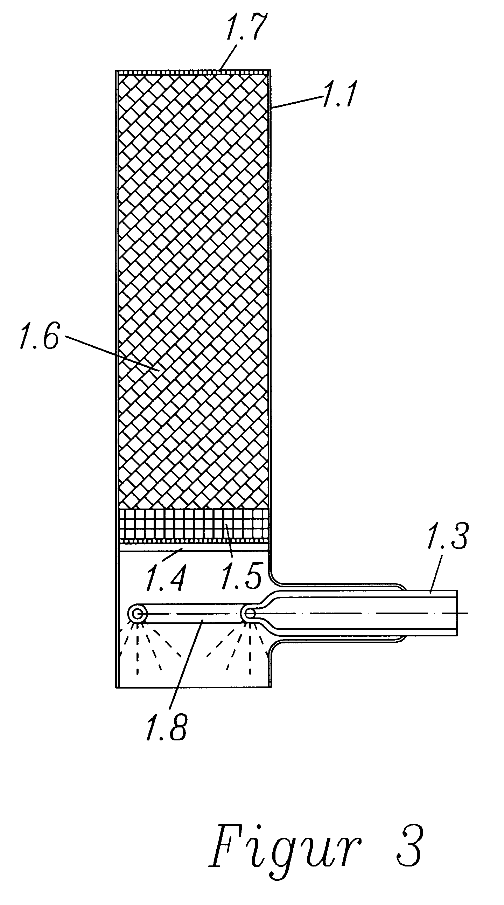

- Figur 3: eine Zusammenstellungszeichnung der Waschanlage wie vorher beschrieben, jedoch ohne Rauchgaskühlung und ohne elektrische Aufladung.

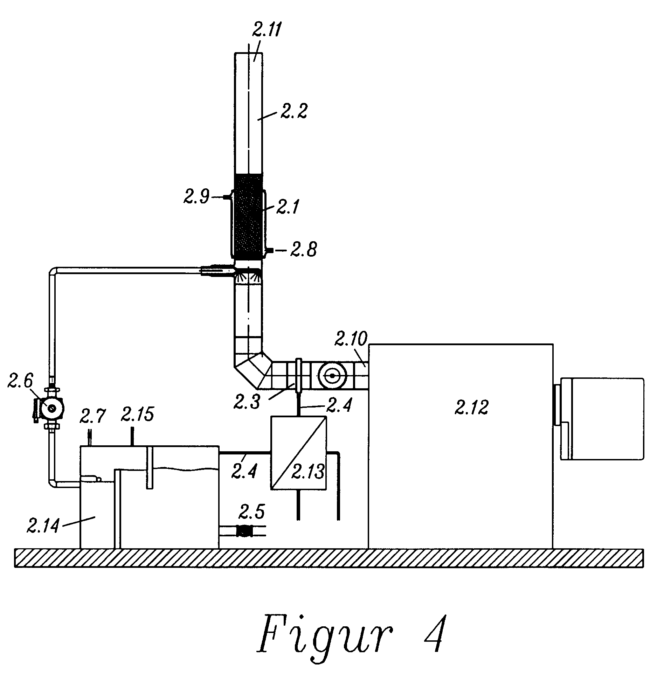

- Figur 4: Typische Anordnung der Rauchgaswaschanlage in einer Abgasanlage im Abgaskamin angeordnet, Wäscher gem. Fig.2.

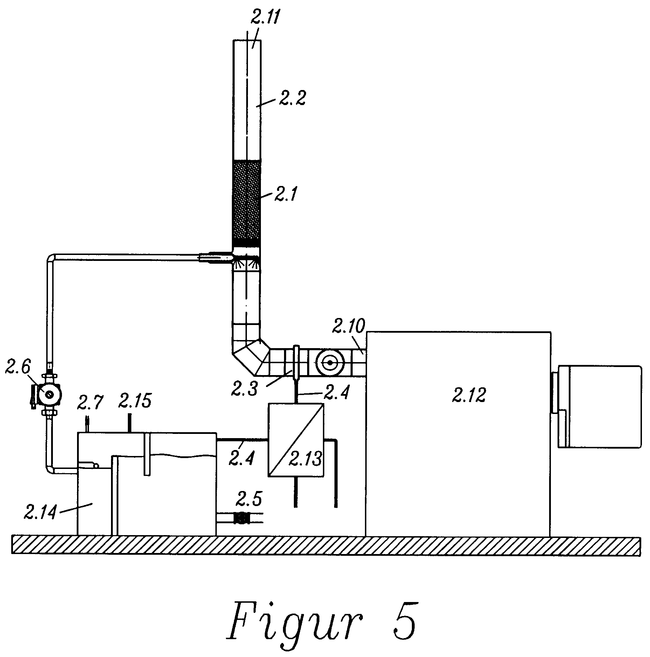

- Figur 5: Typische Anordnung der Rauchgaswaschanlage in einer Abgasanlage im Abgaskamin angeordnet, Wäscher gem. Fig.3.

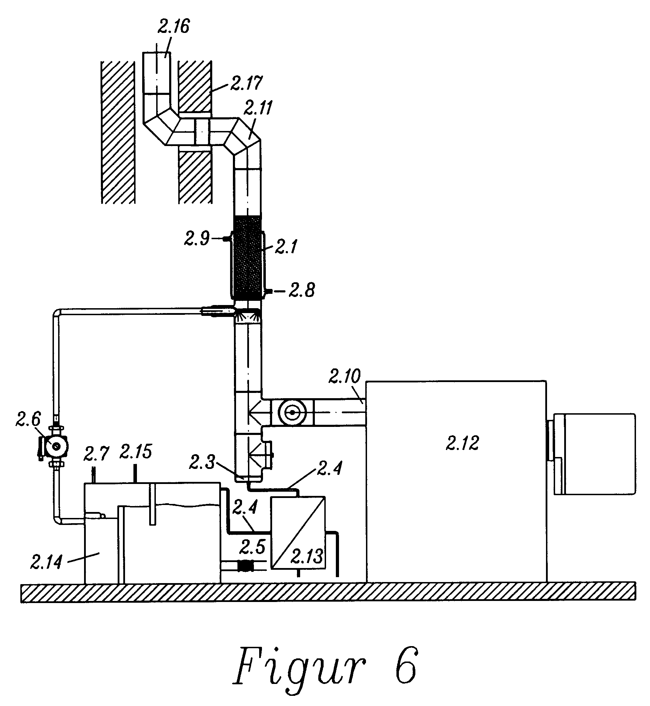

- Figur 6: Typische Anordnung der Rauchgaswaschanlage in einer Verbindungsleitung zwischen Abgaskamin und Wärmeerzeuger angeordnet, Wäscher gem. Fig.2

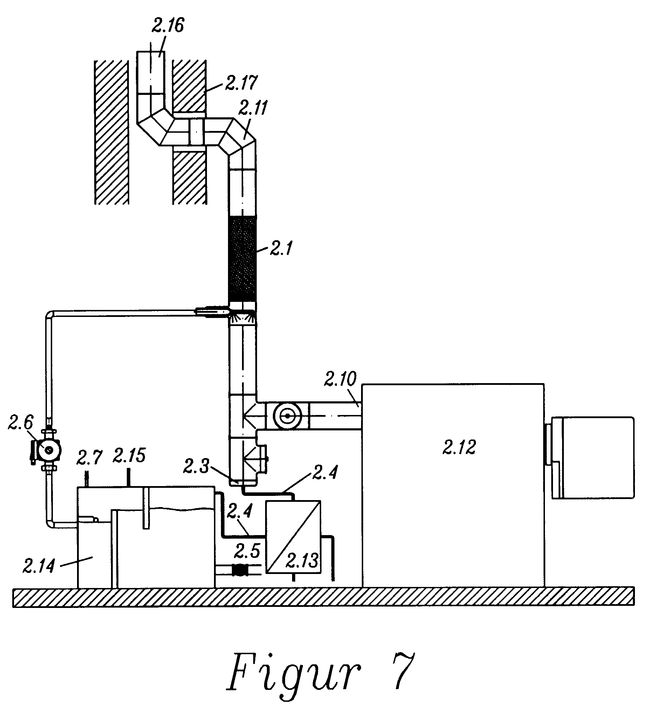

- Figur 7: Typische Anordnung der Rauchgaswaschanlage in einer Verbindungsleitung zwischen Abgaskamin und Wärmeerzeuger angeordnet, Wäscher gem. Fig.3

### Bezugszeichenliste

- 1.1: Gehäuse des Wäschers
- 1.2: Kühlmantel
- 1.3: Düseneinsatz
- 1.4: Füllkörperboden
- 1.5: Füllkörper ww.geordnet oder ungeordnet
- 1.6: Füllkörper ungeordnet
- 1.7: Füllkörperfänger + Tropfenfänger (Demister)
- 1.8: Düse als Ringdüse, Einzeldüse, Düsenbaum od. Ultraschallzerstäuber
- 1.9: Hochspannungsfeld, Magnetfeld od. Microwellenerzeuger
- 1.10: Kühlwasservorlauf
- 1.11: Kühlwasserrücklauf
- 2.1: Abgasreinigung wie Pos. 1.1 - 1.9 bzw. 1.1.- 1.11
- 2.2: Kaminrohr
- 2.3: Kaminsumpf
- 2.4: Kondensatleitung z. Wärmetauscher oder ohne WT, direkt zum Pufferbehälter (2.14).
- 2.5: Sumpfentsorgung - z.B. zur Umkehrosmose über Abschlammventil, oder ohne Nachbehandlung in Abwassernetz.
- 2.6: Hochdruckwaschpumpe
- 2.7: Leckmengennachspeisung der Waschflüssigkeit
- 2.8: Vorlauf - Kühlung (Wärmetauscher)
- 2.9: Rücklauf - Kühlung (Wärmetauscher)
- 2.10: Rauchgaseintritt - v. Wärmeerzeuger
- 2.11: Rauchgasaustritt - Kamin
- 2.12: Wärmerzeuger
- 2.13: Wärmetauscher
- 2.14: Puffer.-u. Reinigungsbehälter
- 2.15: Dosierstutzen f. Chemikalienzugabe
- 2.16: Abgas/Rauchgas od. Abluftkamin vorhanden oder neu
- 2.17: Ummantelung des Kamines soweit notwendig

## Patentansprüche

1. Doppel-oder einwandiges Glasrohr, auch Stahl od. Kunststoff ( 1.1 - 1.2 ), zum Reinigen von Abgasen aus Feuerstätten für feste flüssige oder gasförmige Brennstoffe, zur Abluftreinigung, Schalldämmung und Wärmerückgewinnung.
Die Anordnung findet sich fast ausschließlich an Kaminköpfen, oder zumindest im oberen Teil einer Kaminanlage, kann aber auch wahlweise, je nach Anwendungsfall in der Verbindungsleitung zwischen der Feuerstätte und Kaminanlage angeordnet sein. Die Konstruktion kann weiterhin durch Anordnung eines Doppelmantels ( 1.2 ), zur Rauchgaskühlung und damit der Verbesserung der Schalldämmwirkung dienen.
Breitbandige Schalldämmung wird außerdem durch Einlegen von Glas, Keramik oder Kunststoffüllkörpern in das Waschrohr ( 1.5 + 1.6 ) erreicht, dienen jedoch nebenher noch als Tropfenabscheider für die im Rauchgasstrom enthaltenen Waschflüssigkeitstropfen, dies kann ww. auch durch Einlegen eines Demisters ( 1.7 ) erreicht werden.
Zur Abgasreinigung wird Waschmittel, über den Düsenring, Einzeldüse, Düsenbaum, oder Ultraschallzerstäuber ( 1.8 ), gegen den Rauchgasstrom eingedüst.
Die Reinigungsflüssigkeit kann vorher durch ein außenliegendes Magnetfeld, Hoch - spannungsfeld oder Mircrowellen ( 1.9 ) aufgeladen werden, je nach gewünschtem Abscheidegrad.
Die Waschflüssigkeit selbst, befindet sich in einem geschlossenen Kreislauf, damit ist ein ungewollter Eintrag in ein öffentl. Abwassernetz ausgeschlossen.
Gleichzeitig ist eine problemlose Möglichkeit der Abwärmenutzung aus der Wasch - flüssigkeit gegeben.
Sie wird über den Düsenstutzen (1.3 ) mittels einer Pumpe ( 2.6 )zugeführt, am Kaminende über einen Stutzen im Kaminsumpf ( 2.3 )abgeführt, in einen Puffer.-u. Reinigungsbehälter ( 2.12 ), ww. mit an oder eingebautem Wärmetauscher ( 2.11 ) geführt und dem Waschkreislauf wieder zugeführt.
dadurch gekennzeichnet,
daß im unteren Teil der Glasröhre, unterhalb der Füllkörper (1.6 ) oder des Demisters ( 1.7 ) ein von außen entfernbarer Düsenring, Einzeldüse, Düsenbaum oder Ultraschallzerstäuber( 1.8 ), über einen Mantelstutzen ( 1.3 ), eingebracht sind.
Ein Kühlmantel ( 1.2 ), auf die Glasröhre ( 1.1 ), in fast ganzer Länge aufgebracht sein kann.
Sich im nahen Bereich der Eindüsung ( 1.8 ), ein Hochspannungsfeld, Magnetfeld oder Mircrowellenfeld befinden kann. ( 1.9 ).

2. Abgasreinigung nach Anspruch 1,
dadurch gekennzeichnet,
daß unterhalb des Füllkörperbodens ( 1.4 ), eine ausziehbare Eindüsung angeordnet ist.

3. Abgasreinigung nach Anspruch 1,
dadurch gekennzeichnet,
daß die Eindüsung ( 1.8 ), im äußeren oder inneren Stutzenbereich eine elektrische Quelle zur Aufladung besitzt ( 1.9).

4. Abgasreinigung nach Anspruch 1,
dadurch gekennzeichnet,
daß dicht oberhalb der Eindüsung ( 1.8 ), ein Füllkörperboden angeordnet ist.

5. Abgasreinigung nach Anspruch 1,
dadurch gekennzeichnet,
daß oberhalb des Füllkörperbodens ( 1.4 ), die gesamte oder teilweiseRohrsäule ( 1.1 ), mit Füllkörpern ( 1.6 ),aus Glas, Kunststoff oder Keramik gefüllt ist oder einen Demister ( 1.7 ) besitzt.

6. Abgasreinigung nach Anspruch 1,
dadurch gekennzeichnet,
daß der Abschluss der Rohrsäule ( 1.1 ) ein Füllkörper.-und oder Demister ( 7 ) bildet.

7. Abgasreinigung nach Anspruch 1,
dadurch gekennzeichnet,
daß oberhalb des Füllkörperbodens ( 1.4 ) die Rohrsäule einen Kühlmantel ( 1.2 ) mit den dazugehörigen Anschlußstutzen ( 2.8 + 2.9 ) erhalten kann.
